# EUROPEAN PATENT APPLICATION

(11) **EP 2 267 065 A1**
(43) Date of publication of application: **29.12.2010**
(21) Application number: 09163381.8
(22) Date of filing: 22.06.2009
(51) Int. Cl.: C08J 9/00

(54) **Expandable vinyl aromatic polymers and process for the preparation thereof**

(71) Applicant: TOTAL PETROCHEMICALS RESEARCH FELUY, 7181 Seneffe (Feluy) (BE)
(72) Inventor: Lodefier, Philippe, 1090 Bruxelles (BE); Nowé, Stéphane, 1000 Bruxelles (BE); Sosa, Jose, Deer Park, Texas 77536 (US); Duc, Michel, 64000 Pau (FR)
(74) Representative: Neel, Henry

(57) **Abstract**

The present invention is an expandable vinyl aromatic polymer which comprises:
a) a matrix of a branched aromatic ionomer,
b) 1-10% by weight calculated with respect to the polymer (a), of an expanding agent englobed in the polymeric matrix,
c) 0-20% by weight, calculated with respect to the polymer (a), of a filler homogeneously distributed in the polymeric matrix,

in which,
the branched aromatic ionomer comprises the product of co-polymerizing a first monomer comprising an aromatic moiety and an unsaturated alkyl moiety and a second monomer comprising an ionic moiety and at least two unsaturated moieties, wherein the ionic moiety has at least two ionizable groups, a cationic group that ionizes to form cations and an anionic group that ionizes to form anions, and wherein the cationic group is polyvalent and one capable of forming bridges to other molecules.

The present invention also relates to the use of the expandable vinyl aromatic polymer to make expanded articles, in particular insulation boards.

## Description

### [Field of the invention]

The present invention relates to expandable vinyl aromatic polymers with an enhanced heat insulation capacity and the process for the preparation thereof. More specifically, the present invention relates to a process for the preparation of expandable vinyl aromatic polymers which, after expansion, have a reduced heat conductivity also with a low density, and to the products thus obtained.

Expandable vinyl aromatic polymers, and among these, in particular, expandable polystyrene (EPS), are known products which have been used for a long time for preparing expanded articles which can be adopted in various applicative fields, among which one of the most important is the field of heat insulation. These expanded products are obtained by swelling in a closed mould beads of expandable polymer impregnated with a gas and molding the swollen particles contained inside the mould by means of the contemporaneous effect of pressure and temperature. The swelling of the particles is generally effected with vapour, or another gas, maintained at a temperature slightly higher than the glass transition temperature (Tg) of the polymer.

A particular applicative field of expanded polystyrene is that of thermal insulation in the building industry where it is generally used in the form of flat sheets. The flat expanded polystyrene sheets are normally used with a density of about 30 g/l as the thermal conductivity of the polymer has a minimum at these values .

### [Background of the invention]

The term "expandable beads based on vinyl aromatic polymers" as used in the present description and claims, means vinyl aromatic polymers in the form of granules, containing an expanding system and optionally other additives.

These expandable thermoplastic polymers in the form of granules are particularly used, after expansion and moulding, in the production of household appliances or other industrial equipment, in packaging and thermal insulation in the building industry, due to their thermo-insulating properties. Thermoplastic vinyl aromatic polymers such as polystyrene can be made expandable by incorporating an expandable agent in the polymeric matrix. Typical expanding agents for vinyl aromatic polymers include at least one liquid hydrocarbon containing from 3 to 7 carbon atoms, a halogenated hydrocarbon, carbon dioxide or water. The quantity of expanding agent usually ranges from 2 to 15% by weight. Expandable polymers are produced in general as beads or granules which, under the action of heat, supplied, for example, by steam, are first expanded until a desired density is reached and, after a certain aging period, are sintered in closed moulds to produce blocks or the desired final products.

The making of such expandable beads has already been described in EP 126459, US 2006 211780, US 2005 156344, US 6 783 710 and WO 2008 141766.

The production of beads of PS incorporating pentane is difficult due to the balance required between ease of extrusion/granulation and foam process and compression resistance of the blocks made with the sintered expanded beads (the insulation boards etc ...).

The present invention relates to the use of a vinyl aromatic polymer having ionic clusters. The invention incorporates specific chemistry modification to the general purpose polystyrene (GPPS). Zn Dimetacrylate or similar ionic-metacrylate monomers are incorporated into PS at low level (< 2000 ppm). At high temperature the clusters formed by the Zn are dissociated leading to a low fluidity PS. When temperature is decreased the Zn clusters reassemble to increase melt-strength. At low temperature the material behaves like a high *M̅w̅* PS while at high temperature the material behaves like a lower *M̅w̅* PS. Incorporation of pentane is facilitated due to the low *M̅w̅* behaviour. Extrusion through dies and pelletizing are facilitated due to the low *M̅w̅* behaviour.

Incorporation of fillers (Carbon black, graphite, aluminium, TiO2, Sulfates,...), optionally containing polar groups on the surface, is more easy thanks to the presence of polar functions in the PS chain.

The preferred process is melt mixing of the ionic modified PS with pentane and additives, extrusion through a die, foaming of beads and molding of beads into various shapes.

Typical formulation incorporating the ionic PS and different fillers can be easier manufactured.

### [Brief summary of the invention]

The present invention is an expandable vinyl aromatic polymer which comprises:
a ) a matrix of a branched aromatic ionomer,
b ) 1-10% by weight calculated with respect to the polymer (a), of an expanding agent englobed in the polymeric matrix,
c ) 0-20% by weight, calculated with respect to the polymer (a), of a filler homogeneously distributed in the polymeric matrix,
   in which,
   the branched aromatic ionomer comprises the product of co-polymerizing a first monomer comprising an aromatic moiety and an unsaturated alkyl moiety and a second monomer comprising an ionic moiety and at least two unsaturated moieties, wherein the ionic moiety has at least two ionizable groups, a cationic group that ionizes to form cations and an anionic group that ionizes to form anions, and wherein the cationic group is polyvalent and one capable of forming bridges to other molecules.

Advantageously the filler is any material capable to reduce the thermal conductivity of the expanded vinyl aromatic polymer.

An advantage of the expanded vinyl aromatic polymer is the very good compression resistance.

An advantage of the expandable vinyl aromatic polymer of the invention is the MFI increase during extrusion which reduces the pressure drop in the course of the preparation process.

Another advantage of the expandable vinyl aromatic polymer of the invention comprising fillers is the compatibility of the matrix with the fillers which helps the dispersion of said fillers. This highly reduces the fouling of the die plate of the extruder.

The expandable vinyl aromatic polymer of the invention is produced in the form of beads or granules.

The present invention also relates to a process for preparing the composition wherein it is carried out by mixing the branched aromatic ionomer in the melted state with the blowing agent or agents and optionally the fillers.

In an advantageous embodiment the mixing is carried out in a chamber equipped with at least one stirring means and under temperature and pressure conditions which are capable of preventing expansion of the composition, preferably in an extruder, in particular a single-screw or twin-screw extruder, or in one or more static mixers at a temperature greater than the glass transition temperature of the polymer, in particular a temperature ranging from 120 to 250°C and under an absolute pressure ranging from 0.1 to 10 MPa.

The present invention also relates to the use of the expandable vinyl aromatic polymer to make expanded articles, in particular insulation boards.

In an embodiment the moulded and expanded article is produced by a process comprising the following steps:
(i) a step of pre-expansion, by contacting and mixing the composition, which is in the form in particular of expandable particles or, preferably, expandable beads, with water vapour, in particular in a stirred tank, under pressure and temperature conditions capable of forming expanded particles or expanded beads having in particular a bulk density ranging from 5 to 200 kg/m3, preferably from 5 to 1 00kg/m3 and in particular from 5 to 50 kg/m3,
(ii) a step of stabilizing the particles or beads thus expanded, by contacting them with ambient air, and
(iii) a step of moulding the particles or beads thus stabilized, by introducing them into a mould and by heating the mould so as to weld the particles or beads to one another and so to produce a moulded and expanded article having in particular the desired bulk density and, preferably a bulk density substantially identical to that of the expanded particles or expanded beads obtained in step (i).

### [Detailed description of the invention]

**As regards the branched aromatic ionomer,** it is described in WO 2006 081295 the content of which is incorporated in the present application.

Advantageously the first monomer is selected from the group consisting of styrene, alphamethyl styrene, t-butylstyrene, p-methylstyrene, vinyl toluene, and mixtures thereof. Preferably the first monomer is styrene.

Components that may be used as the second monomer include, but are not limited to: zinc diacrylate, zinc dimethacrylate, zinc di-vinylacetate, zinc di-ethylfumarate, and the like; copper diacrylate, copper dimethacrylate, copper di-vinylacetate, copper di-ethylfumarate, and the like; aluminum triacrylate, aluminum trimethacrylate, aluminum tri-vinylacetate, aluminum tri-ethylfumarate, and the like; zirconium tetraacrylate, zirconium tetramethacrylate, zirconium tetra-vinylacetate, zirconium tetra-ethylfumarate, and the like. For components having monovalent cationic groups the second monomer may be sodium acrylate, sodium methacrylate, silver methacrylate, and the like. These components and any component useful as the second monomer may be prepared by, for example, reacting an organic acid or an anhydride with a metal or metal salt.

Advantageously the second monomer is selected from the group consisting of: zinc diacrylate, zinc dimethacrylate, zinc di-vinylacetate, zinc di-ethylfumarate, and the like; copper diacrylate, copper dimethacrylate, copper di-vinylacetate, copper di-ethylfumarate, and the like; aluminum triacrylate, aluminum trimethacrylate, aluminum tri-vinylacetate, aluminum tri-ethylfumarate, and the like; zirconium tetraacrylate, zirconium tetramethacrylate, zirconium tetra-vinylacetate, zirconium tetra-ethylfumarate, and mixtures thereof. Preferably the second ionomer is zinc diacrylate or zinc dimethacrylate.

The first monomer can be a mixture of various aromatic monomer comprising an aromatic moiety and an unsaturated alkyl moiety and /or can be used alone or in a mixture of up to 50% by weight with other co-polymerizable monomers. Examples of said monomers are (meth) acrylic acid, Ci-C4 alkyl esters of methacrylic acid, such as methyl acrylate, methyl methacrylate, ethyl acrylate, ethyl methacrylate, isopropyl acrylate, butyl acrylate, amides and nitriles of (meth)acrylic acid, such as acrylamide, methacrylamide, acrylonitrile, methacrylinitrile , butadiene, ethylene, divinyl benzene, maleic anhydride, etc.. Preferred co polymerizable monomers are acrylonitrile and methyl methacrylate.

The monomers used to prepare the branched aromatic ionomers may interact in several ways to affect the physical properties of the ionomers. A first way is the formation of covalent bonds due to the polymerization of the unsaturated moieties. A second way that the monomers used to prepare the branched aromatic ionomers may interact is by the formation of a bridge wherein a polyvalent cationic group is coordinated to two anionic groups which are integrated into the backbones of at least two separate chains. This coordination may, in effect, cross link the two chains thereby increasing that segment's total effective molecularweightto the sum of the two chains. A third way that that the monomers used to prepare the branched aromatic ionomers may interact is by the formation of multiple bridges as described immediately above. The more crosslinking that occurs, the less flexible the three dimensional structure of the ionomer, which may result in lower melt flow values and increased melt strength. In yet a fourth way of interacting, when the cationic groups are mono-valent, the ionic moieties, while not fully bridged, may still associate due to hydrophobic-hydrophilic forces.

In these embodiments, this weaker but still measurable force may result from the comparatively non-polar hydrophobic, non-ionic parts of the molecule being mutually attracted and repelled from the polar hydrophilic ionic parts of the ionomer. These forces are more noticeable as the proportion of the second monomer is increased in concentration. These four are not all of the possible interactions of the monomers. In addition, most of the properties of the ionomers associated with its primary, secondary, and even tertiary structure, such as the ionomers' glass transition temperatures "Tg" may be affected.

Both the amount of second monomer and the type of interaction with the first monomer will dictate the amount of second monomer used. Therefore, in some embodiments where the interaction is weak, such as when the cationic group of the second monomer is mono-valent, and a significant amount of effect is desired from the second monomer, the branched ionomers are prepared with a comparatively large amount of the second monomer, typically with a ratio of first monomer to second monomer of from about 999:1 to about 40:60. In other such embodiments, the ratio is from about 95:5 to about 50:50. In still other such embodiments, the ratio is from about 90:10 to about 60:40. Other embodiments have a ratio of from 80:20 to 70:30. Where the interaction is very strong, such as when the cationic group is di-or tri-valent, or only small changes to the properties of the ionomer due to the second monomer are desired, the amount of the second monomer is quite small ranging from about 10 parts per million "ppm" to about 10,000 ppm. In other such ionomers, the range is from about 100 ppm to about 1000 ppm. In still other such ionomers, the range is from about 250 ppm to about 800 ppm.

The branched aromatic ionomer is prepared by co-polymerizing the first and second monomers. Each of these monomers has at least one polymerizable unsaturation. The polymerization may be carried out using any method known to those of ordinary skill in the art of performing such polymerizations. For example, the polymerization may be carried out by using a polymerization initiator. Examples of the polymerization initiators are, for instance, radical polymerization initiators such as benzoyl peroxide, lauroyl peroxide, t-butyl peroxybenzoate and 1,1-di-t-butylperoxy-2,4-di-t-butylcyclohexane. The amount of the polymerization initiator is from about 0 to about 1 percent by weight of the monomers. In one embodiment, the amount of polymerization initiator is from about 0.01 to about 0.5 percent by weight of the monomers. In another embodiment, the amount of polymerization initiator is from about 0.025 to about 0.05 percent by weight of the monomers.

Alternatively, rather than using an initiator, the ionomer may be prepared using heat as an initiator. The ionomer may be prepared using a nonconventional initiator such as a metallocene catalyst as is disclosed in US. Patent No. 6,706,827 to Lyu, et al., which is incorporated herein in its entirety by reference. In one embodiment, the monomers may be admixed with a solvent and then polymerized. In another embodiment, one of the monomers is dissolved in the other and then-polymerized. In still another embodiment, the monomers may be fed concurrently and separately to a reactor, either neat or dissolved in a solvent, such as mineral oil.

In yet another embodiment, the second monomer may be prepared in-situ or immediately prior to the polymerization by admixing the raw material components, such as an unsaturated acid or anhydride and a metal alkoxide, in-line or in the reactor. Any process for polymerizing monomers having polymerizable unsaturation know to be useful to those of ordinary skill in the art in preparing such polymers may be used. For example, the process disclosed in U.S. Patent No. 5,540,813 to Sosa, et al., may be used and is incorporated herein in its entirety by reference. The processes disclosed in U.S. Patent No. 3,660,535 to Finch, et a!., and U. S. Patent No. 3,658,946 to Bronstert, et al., may be used and are both incorporated herein in their entirety. Any process for preparing general purpose polystyrene may be used to prepare the branched aromatic ionomers.

The branched aromatic ionomer can be mixed with up to 50%w of a GPPS.

The ionomers may be admixed with additives prior to being used in end use applications. For example, the ionomers may be admixed with fire retardants, antioxidants, lubricants, UV stabilizers, antistatic agents, and the like. Any additive known to be useful to those of ordinary skill in the art of preparing ionomers to be useful may be used with the branched ionomers.

**As regards the expanding agent,** it is selected from aliphatic or cycloaliphatic hydrocarbons containing from 3 to 6 carbon atoms such as n-pentane, iso-pentane, cyclopentane or blends thereof; halogenated derivatives of aliphatic hydrocarbons containing from 1 to 3 carbon atoms, such as, for example, dichlorodifluoromethane, 1,2,2- trifluoroethane, 1,1,2-trifluoroethane; carbon dioxide and water.

**As regards the fillers,** one can cite any material capable to reduce the thermal conductivity of the expanded vinyl aromatic polymer. One can cite carbon black, graphite, mica, talc, silica, titanium dioxide and barium sulfate. One can cite carbon black with a surface area, measured according to ASTM D-3037/89, ranging from 5 to 200 m2/g.

**The expandable vinyl aromatic polymer may also comprise** at least one additive selected from flame retardants, nucleating agents, plasticizers and agents which facilitate the demoulding of the moulded and expanded articles. In particular it may comprise at least one flame retardant selected in particular from halogenated hydrocarbons, preferably brominated hydrocarbons, in particular C6 to C12 hydrocarbons, such as hexabromocyclohexane, penta-bromomonochlorocyclohexane or hexabromocyclododecane, in an amount which can range from 0.05 to 2 parts, preferably from 0.1 to 1.5 parts, by weight, per 100 parts by weight of the styrene polymer. The composition may further comprise at least one nucleating agent selected in particular from synthetic waxes, in particular Fischer-Tropsch waxes and polyolefin waxes such as polyethylene waxes or polypropylene waxes, in an amount which can range from 0.05 to 1 part, preferably from 0.1 to 0.5 part, by weight per 100 parts by weight of the branched aromatic ionomer. The composition may likewise comprise at least one plasticizer, selected in particular from mineral oils and petroleum waxes such as paraffin waxes, in an amount which can range from 0.1 to 1 part, preferably from 0.1 to 0.8 part, by weight per 100 parts by weight of the branched aromatic ionomer. The composition may additionally comprise at least one agent which facilitates the demoulding of the moulded and expanded articles, selected in particular from inorganic salts and esters of stearic acid, such as glycerol mono-, di or tristearates and zinc stearate, calcium stearate or magnesium stearate, in an amount which can range from 0.05 to 1 part, preferably from 0.1 to 0.6 part, by weight per 100 parts by weight of the branched aromatic ionomer.

**As regards the process to make said expandable polymer,** it is carried out by mixing the branched aromatic ionomer in the melted state with the blowing agent or agents and optionally the fillers.

In an advantageous embodiment the mixing is carried out in a chamber equipped with at least one stirring means and under temperature and pressure conditions which are capable of preventing expansion of the composition, preferably in an extruder, in particular a single-screw or twin-screw extruder, or in one or more static mixers at a temperature greater than the glass transition temperature of the polymer, in particular a temperature ranging from 120 to 250°C and under an absolute pressure ranging from 0.1 to 10 MPa.

The making of such expandable beads has already been described in EP 126459, US 2006 211780, US 2005 156344, US 6 783 710 and WO 2008 141766, the content of which is incorporated in the present invention.

According to an embodiment the present invention relates to a process for preparing in mass and in continuous, expandable vinyl aromatic polymers, which comprises the following steps in series: (i) feeding the branched aromatic ionomer, as described above, to an extruder, optionally together with fillers, (ii) heating the branched aromatic ionomer to a temperature higher than the relative melting point; (iii) injecting the expanding agent and possible additives into the molten polymer before extrusion through a die; and (iv) forming expandable beads, through a die, with an average diameter ranging from 0.2 to 2 mm. The expandable beads produced are subjected to pre-treatment generally applied to conventional expandable beads and which essentially consists in:
1. coating the beads with a liquid antistatic agent such as amines, tertiary ethoxylated alkylamines, ethylene oxide-propylene oxide copolymers, etc. The purpose of this agent is to facilitate both the adhesion of the coatings
2. applying the "coating" to the above beads, said coating essentially consisting of a mixture of mono-, di-and trimesters of glycerin (or other alcohols) with fatty acids and of metallic stearates such as zinc and/or magnesium stearate.

### [Examples]

**White EPS**

| **Ingredient** | **Product** | **Range (typicals)** |
|---|---|---|
| Polystyrene | | 95.3-90.5% |
| Expanding agent | Pentane-isopentane 80/20 | 4-7% (6.2(%) |
| Talc | Luzenac 20MO | 0.5-2%(1%) |
| Wax | Baker Hugues Polywax' 2000 | 0.2-0.5% (0.3%) |
| Coating 1 | Baerlocher GM55 | 100 ppm |
| Coating 2 | Baerlocher Zincum 5 | 100ppm |

**Grey EPS**

| **Ingredient** | Product | **Range (typicals)** |
|---|---|---|
| **Polystyrene** | | 93.3-86.5% |
| Expanding agent | Pentane-isopentane 80/20 | 4-7%(6.2%) |
| Carbon Black | Timcal Ensaco 260G | 2-4% 2.5% |
| Talc | Luzenac 20MO | 0.5-2% 1 |
| Wax | Baker Hugues Polywax 2000 | 0.2-0.5% (0.3%) |
| Coating 1 | Baerlocher GM55 | 1OOppm |
| Coating 2 | Baerlocher Zincum 5 | 10O PPM |

The polystyrene has been made according to WO 2006-081295 (Reimers , Sosa)

The Timcal Ensaco 260 has a BET nitrogen Surface area (ASTM D 3037-89) of 70 m2/g.
The wax is a polyethylene wax.
Baerlocher® GM 55 is a monoglyceride.
Baerlocher® Zincum 5 is a Zn stearate.

## Claims

1. Expandable vinyl aromatic polymer which comprises:
a ) a matrix of a branched aromatic ionomer,
b ) 1-10% by weight calculated with respect to the polymer (a), of an expanding agent englobed in the polymeric matrix,
c ) 0-20% by weight, calculated with respect to the polymer (a), of a filler homogeneously distributed in the polymeric matrix,
in which,
the branched aromatic ionomer comprises the product of co-polymerizing a first monomer comprising an aromatic moiety and an unsaturated alkyl moiety and a second monomer comprising an ionic moiety and at least two unsaturated moieties, wherein the ionic moiety has at least two ionizable groups, a cationic group that ionizes to form cations and an anionic group that ionizes to form anions, and wherein the cationic group is polyvalent and one capable of forming bridges to other molecules.

2. Expandable vinyl aromatic polymer according to claim 1 wherein the first monomer is selected from the group consisting of styrene, alphamethyl styrene, t-butylstyrene, p-methylstyrene, vinyl toluene, and mixtures thereof.

3. Expandable vinyl aromatic polymer according to claim 2 wherein the first monomer is styrene.

4. Expandable vinyl aromatic polymer according to any one of the preceding claims wherein the second monomer is selected from the group consisting of: zinc diacrylate, zinc dimethacrylate, zinc di-vinylacetate, zinc di-ethylfumarate, and the like; copper diacrylate, copper dimethacrylate, copper di-vinylacetate, copper di-ethylfumarate, and the like; aluminum triacrylate, aluminum trimethacrylate, aluminum tri-vinylacetate, aluminum tri-ethylfumarate, and the like; zirconium tetraacrylate, zirconium tetramethacrylate, zirconium tetra-vinylacetate, zirconium tetra-ethylfumarate, and mixtures thereof.

5. Expandable vinyl aromatic polymer according to claim 4 wherein the second monomer is zinc diacrylate or zinc dimethacrylate.

6. Expandable vinyl aromatic polymer according to any one of the preceding claims wherein the branched aromatic ionomer is mixed with up to 50%w of a GPPS.

7. Expandable vinyl aromatic polymer according to any one of the preceding claims wherein the filler is any material capable to reduce the thermal conductivity of the expanded vinyl aromatic polymer.

8. Expandable vinyl aromatic polymer according to any one of the preceding claims wherein the filler is selected among : carbon black, graphite, mica, talc, silica, titanium dioxide and barium sulfate.

9. Expandable vinyl aromatic polymer according to claim 8 wherein One can cite carbon black with a surface area, measured according to ASTM D-3037/89, ranging from 5 to 200 m2/g.

10. Process to make the expandable vinyl aromatic polymer according to any one of the preceding claims wherein it is carried out by mixing the branched aromatic ionomer in the melted state with the blowing agent or agents and optionally the fillers.

11. Process according to claim 10 wherein the mixing is carried out in a chamber equipped with at least one stirring means and under temperature and pressure conditions which are capable of preventing expansion of the composition, preferably in an extruder, in particular a single-screw or twin-screw extruder, or in one or more static mixers at a temperature greater than the glass transition temperature of the polymer, in particular a temperature ranging from 120 to 250°C and under an absolute pressure ranging from 0.1 to 10 MPa.

12. Expandable vinyl aromatic polymer according to any one of claims 1 to 9 wherein it is in the form of beads or granules.

13. Use of the expandable vinyl aromatic polymer according to any one of claims 1 to 9 to make expanded articles, in particular insulation boards.
